# EUROPEAN PATENT SPECIFICATION

(11) **EP 0 655 048 B1**
(45) Date of publication and mention of the grant of the patent: **12.06.1996**
(21) Application number: 93918056.8
(22) Date of filing: 19.08.1993
(51) Int. Cl.: B65G 1/04, B66F 9/14

(54) **DOUBLE REACH PLATTEN ASSEMBLY**
REGALBEDIENUNGSGRÄT MIT GABELN DOPPLTER REICHWEITE
AGENCEMENT DE PLATEAU A DOUBLE PORTEE

(30) Priority: 19.08.1992 GB 9217741; 30.04.1993 GB 9309013
(43) Date of publication of application: 31.05.1995
(73) Proprietor: CLECO LIMITED, Market Harborough, Leics LE16 7PZ (GB)
(72) Inventor: JINKS, David, M. Gaddesby Hall, Leicestershire LE7 8WG (GB)
(74) Representative: SERJEANTS
(86) International application number: GB9301763
(87) International publication number: WO9404447

(56) References cited:
- EP-A- 0 410 286
- FR-A- 2 072 159
- FR-A- 2 185 586
- FR-A- 2 189 281
- FR-A- 2 520 716
- US-A- 4 003 296

## Description

### Field of the Invention

The invention relates to adouble reach platten assembly for a side reach crane or truck of a warehouse racking system as set out in the preamble of claim 1. Such a platten assembly can pick up pallets from either side of a warehouse aisle, and can reach laterally to a first row of pallets immediately alongside the aisle or to a second row of pallets spaced from the aisle behind the first row. The platten arms of such a double reach platten assembly are telescopic to maximum reach, and must be able to resist the large cantilever stresses imposed on them when they are supporting a pallet laterally at maximum extension.

### Background Art

Double reach platten assemblies of the above kind are known, and generally each platten arm comprises three or more telescopically extensible elements. Such a platten assembly is shown in French Patent Application FR-A-2520716. A constant ratio coupling or gearing has always governed the extension of those elements, so that when the platten arms are laterally extended to their far reach positions to pick up a pallet from the row distant from the aisle (a rear pallet position), all elements of each telescopically assembled platten arm are fully extended.

On the other hand if the platten assembly were only 50% extended, to pick up a pallet from near the aisle (a front pallet position), then each element of each platten arm would be only 50% extended.

If each platten arm is considered as comprising a base portion, an intermediate portion (or two or more intermediate portions) and a distal portion, then it will readily be seen that if the distal portions are at their maximum extension from the intermediate portions for the far reach or rear pallet pick up position, then they will be only 50% extended from the intermediate portions for the near reach or front pallet pick up position. That means that for penetration of the distal portions fully into a fork cavity of a pallet in the front pallet position, the intermediate portions themselves must extend approximately 50% into that fork cavity. As these intermediate portions have to be thicker, this is conventionally accommodated by providing front to back spacer bars on top of the warehouse racking beams of the front pallet positions, so that each pallet placed at those front positions is supported above the racking beams by a discrete distance sufficient to accommodate the intermediate platten sections between the underside of the pallet board and the racking beams. Such spacers, however, are expensive and increase the precision with which the pallets have to be placed onto the racking beams. Instead of being able to position the pallet anywhere along the length of the beams, the operator is obliged to position the pallet precisely and squarely on top of three such bars. The spacer bars also represent waste space in the overall height of the warehouse racking system, since the height of each tier of racking is to an extent increased by the height of those space bars.

### Summary of the Invention

It is an object of the invention to provide a double reach platten assembly which avoids the requirement for the above spacer bars.

The invention provides a platten assembly for a side reach truck of a warehouse racking system, comprising:
a base mounting mountable on the load platform of the truck;
a pair of double reach platten arms extensible in synchronism to one side of a base mounting to front and back pallet positions respectively on one side of the load platform of the truck and to the other side of the base mounting to front and back pallet positions respectively on the other side of the load platform of the truck;
wherein each platten arm comprises:
a carriage section mounted on the base mounting and movable across the base mounting from one side to the other side thereof;
one or more intermediate sections extensible telescopically in cantilever from either side of the carriage section; and
a distal section extensible telescopically in cantilever from the intermediate section or from one of the intermediate sections for penetrating the fork cavity of a pallet positioned at a front or back pallet position at either side of the load platform of the truck;
characterized in that a platten arm control mechanism is provided for moving the intermediate sections up to the front or back pallet positions on either side of the load platform of the truck without substantial penetration of the fork cavity of a pallet positioned at that pallet position while causing the distal sections to penetrate the fork cavity. In this way whether a pallet is positioned in a first pallet position closely laterally adjacent to or in a second pallet position spaced from the load platform it can be picked up by laterally extending the intermediate sections only so far that they do not foul an associated front racking beam and by laterally extending the distal sections into the fork cavity. There is therefore no need to use spacer bars to prevent the intermediate sections fouling the warehouse racking beam.

Depending on the respective sizes of the pallets and racking beams, the intermediate sections may be advanced to a greater or lesser extent. Most warehouse racking systems for so-called Europallets (which are a standard size of 800 mm x 1200 mm with three bottom runners in the 1200mm direction but no bottom boarding) place the racking beams at a spacing approaching 1200mm, so that the racking beams support the pallets beneath the end blocks at opposite ends of the runners, with virtually no overlap. For use in these warehouses, the intermediate sections do not substantially penetrate the fork cavity because such penetration would cause fouling on the racking beam.

In some warehouses, however, the racking beams may be at a spacing of as little as 1000mm, so that the pallet overhangs 100mm front and back. In these warehouses the intermediate sections may penetrate up to 100mm before the outermost intermediate section reaches the racking beam.

Furthermore, by suitably shaping the intermediate sections, it may be possible to design a platten assembly in which the outer end of the outermost intermediate section is shaped partially to overlie the racking beam without fouling the beam. In such a case, the thinner overlying end portion of the intermediate section can if desired penetrate the fork cavity without fouling the beam, even when used with racking having relatively widely spaced beams.

Alternatively, the distal section may itself be a telescopically extending section. In this case the intermediate section could be extended towards, but not up to, the pallet; and the additional reach provided by the telescopic nature of the distal section could be used to advance the distal portions of the platten arms until they penetrate the fork cavity of the pallet.

The different pallet sizes and warehouse racking sizes that are available can all be accommodated by the invention as long as there is independent control of the extension of the one or more intermediate sections on the one hand, and the distal sections on the other.

This selective control of the lateral extension of the distal and intermediate sections may be by means of selective gearing or independent motors. In the former case, the means for selectively controlling the lateral extension of the intermediate sections and of the distal sections comprises motor means for controlling the lateral extension of the intermediate sections and optionally the carriage sections, and selectable gearing means for controlling the lateral extension of the distal sections in response to such lateral movement, the gearing means having a first gear ratio to achieve maximum extension of the distal sections when the intermediate sections have extended the small distance up to the first pallet position and the gearing means having a second gear ratio to achieve maximum extension of the distal sections when the intermediate sections have extended a longer distance up to the second pallet position. In the latter case, the means for selectively controlling the lateral extension of the intermediate sections and of the distal sections comprises a first advancing mechanism for moving the intermediate sections the carriage sections laterally of the base mounting without causing lateral movement of the distal sections, and a second advancing mechanism for moving the distal sections, supported on the intermediate sections, relative to the carriage sections.

The distal sections may be longer than the pallet depth so that they can extend completely or substantially completely through the fork cavity of the pallet whilst maintaining an overlap portion with the associated intermediate sections sufficient to maintain rigidity. It should be remembered that when used in certain warehouses, the thicker intermediate sections of the platten assembly do not penetrate substantially into the fork cavity. That means that when the loaded pallet is retracted to a central position over the load platform of the truck, it will not be central on the distal sections unless additional centralizing means are introduced into the load handling capabilities of the platten assembly. Lack of load centralization on the distal section could otherwise give rise to difficulty if a load were retrieved from one side of the aisle and delivered to the other side.

The invention offers a variety of alternative centralizing means for use with the platten assembly. In a first embodiment, means are provided for temporarily supporting the pallet over the carriage sections by raising it from the distal sections of the platten arms while repositioning the distal sections centrally under the pallet so that the pallet can then be lowered back onto the distal sections and the pallet can then be returned to the centre line of the load platform and the aisle.

In a second embodiment, each distal section comprises a top plate having a length substantially equal to the pallet depth, and means are provided for moving the top plate longitudinally of the distal section in response to relative movement between the distal and associated intermediate sections, so that when the distal section is positioned centrally on its intermediate section, its top plate is positioned centrally on the distal section; and when the distal section is in maximum cantilever from either side of its intermediate section, its top plate is positioned at that side of the distal section, optionally marginally cantilevered out over that side. In variants of that second embodiment, the means for moving the top plate longitudinally of its distal section may comprise either a belt and pulley mechanism or a rack and pinion with chain or belt drives.

Although the intermediate sections are described herein as pairs of forks separated along their length, it should be understood that in all embodiments they may be conjoined at a level below the bottom level of a pallet to be lifted by the distal sections.

The platten assembly of the invention is suitable for use with the so-called Euro-Pallets which comprise a boarded top deck and three parallel support rails, but no bottom decking or transverse rails. Such pallets can rest directly on the beams of a warehouse beam racking system without the need to add spacer bars to the front beams to increase the clearance beneath a front row of pallets. Alternatively the platten assembly can be used with top and bottom boarded pallets, but as with any other double reach platten assembly means such as spacers must be modified to create an aperture between the bottom boarding of the pallets and the beams to permit the distal portions to pass beneath the bottom boarding.

### Drawings

Figure 1 is a schematic perspective view of a side reach truck of a warehouse racking system, incorporating a platten assembly according to the invention.
Figures 2 to 4 are schematic side elevations of a first embodiment of a platten assembly of the invention picking up a loaded pallet from a position adjacent the aisle (Figure 2); from a position remote from the aisle (Figure 3) and with the pallet being withdrawn into the aisle (Figure 4);
Figure 5 is a repetition of Figure 2, but showing the carriage section of the platten assembly cross-hatched for identification purposes;
Figure 6 is a repetition of Figure 2 but showing the intermediate section of the platten assembly cross-hatched;
Figure 7 is a repetition of Figure 2 but showing the distal section cross-hatched;
Figures 8 to 10 are schematic side elevations of the advancing mechanism for the intermediate platten sections, in positions corresponding to Figures 4, 2 and 3 respectively;
Figures 11 to 13 correspond to Figures 8 to 10, but with the carriage, intermediate and distal sections overlaid on the advancing mechanism;
Figures 14 to 16 are schematic side elevations of the advancing mechanism for the distal platten sections, illustrating independent movement of the distal sections relevant to the intermediate sections;
Figures 17 to 19 correspond to Figures 14 to 16, but with the carriage intermediate and distal sections overlaid on the advancing mechanism;
Figures 20 to 24 illustrate the transfer of a pallet from a central position on the side reach truck to a stowed position laterally distant from the aisle, and illustrating the use of lifting rams on the base mounting, for the accurate positioning of the load on the distal sections of the platten arms;
Figure 25 is an axial section through the platten assembly of Figures 22 to 24, illustrating the advancing mechanisms for the intermediate and distal sections and the lifting rams for central positioning of the pallet;
Figure 26 is an axial section similar to that of Figure 25, but through an alternative modified construction which removes the need for the lifting rams of Figures 20 to 25;
Figure 27 is a side elevation of the platten assembly of Figure 26 with the sections in their full reach positions and supporting a pallet;
Figure 28 is a plan view of the assembly of Figure 27 but without the pallet and showing the belt and pulley system of moving the top plate system for centralizing the pallet on the distal sections; and
Figure 29 is an enlarged view of the distal and intermediate sections of Figure 28, again showing the belt and pulley system of moving the top plate system.
Figure 30 is a schematic side elevation illustrating an alternative embodiment of a platten assembly of the invention about to pick up a pallet from a position adjacent the aisle;
Figure 31 is a schematic side elevation similar to that of Figure 30 but about to pick up a pallet from a position remote from the aisle;
Figure 32 is a schematic vertical cross-section through the platten assembly of Figures 30 and 31; and Figures 33 to 35 are schematic elevations and cross-section corresponding to those of Figures 30 to 32 but of a platten assembly having a two-stage distal section and a single intermediate section, utilizing a wider aisle to allow wider sections for all except the final distal section.

In the drawings, the same reference numerals have been used between different Figures, for the same parts or for parts having the same function.

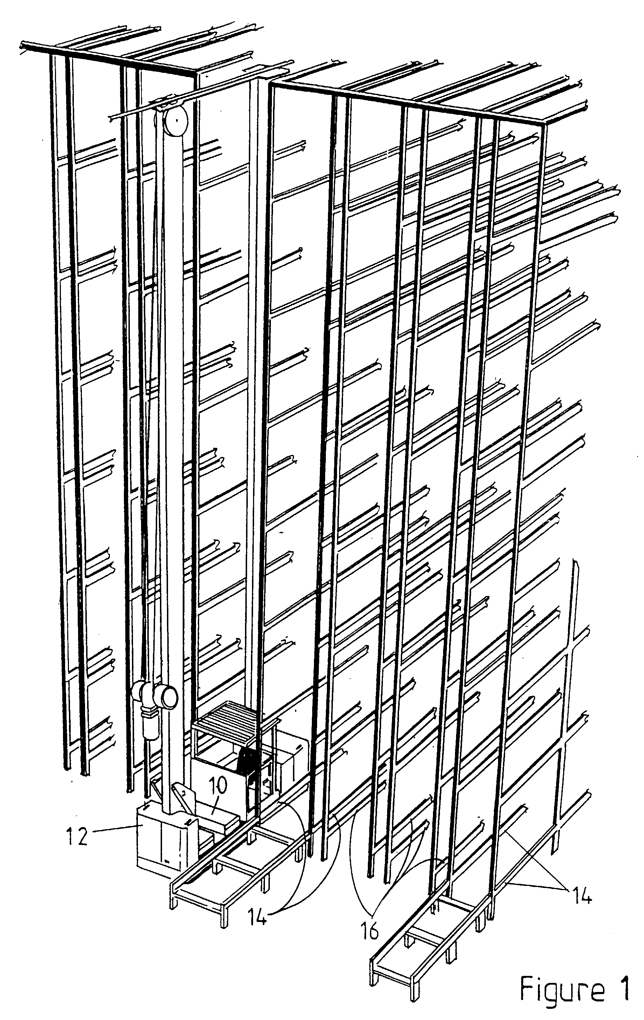

Figure 1 illustrates a complete platten assembly 10 of the invention, installed on a side reach truck 12 of a warehouse racking system. The racking system includes front beams 14 providing support for a first row of pallets at a position alongside the aisle (the front pallets); and rear beams 16 providing support for a second row of pallets at a position distant from the aisle (the rear pallets). It will be appreciated that the front beams 14 are slightly lower than the rear beams 16. That is conventional design, to enable the thicker intermediate platten sections to pass over the front beams 14 as the platten assembly reaches out over the front beams to its far reach position.

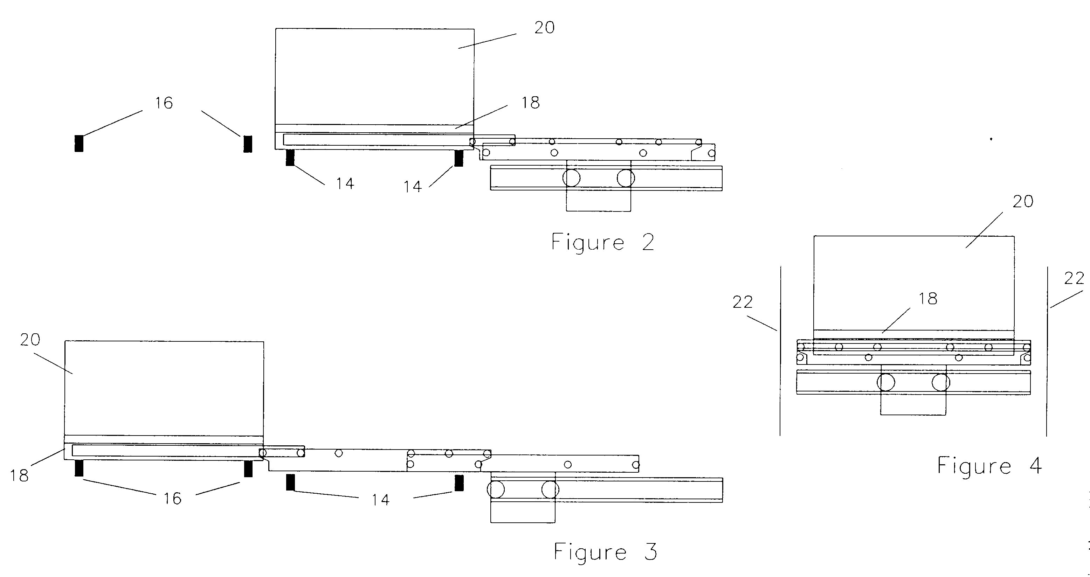

Figure 2 illustrates a platten assembly according to the invention about to lift a loaded pallet from the front pallet position, and Figure 3 illustrates the same assembly about to lift a loaded pallet from the rear pallet position. The racking system illustrated is a conventional system used for Europallets wherein the racking beams are relatively far apart so that the pallet is supported near its edges. In Figures 2 and 3 the pallet is designated 18, and its load is designated 20. Figure 4 shows the load retracted by the platten assembly to a central position on the load platform of the truck, the aisle width being indicated schematically by vertical lines 22.

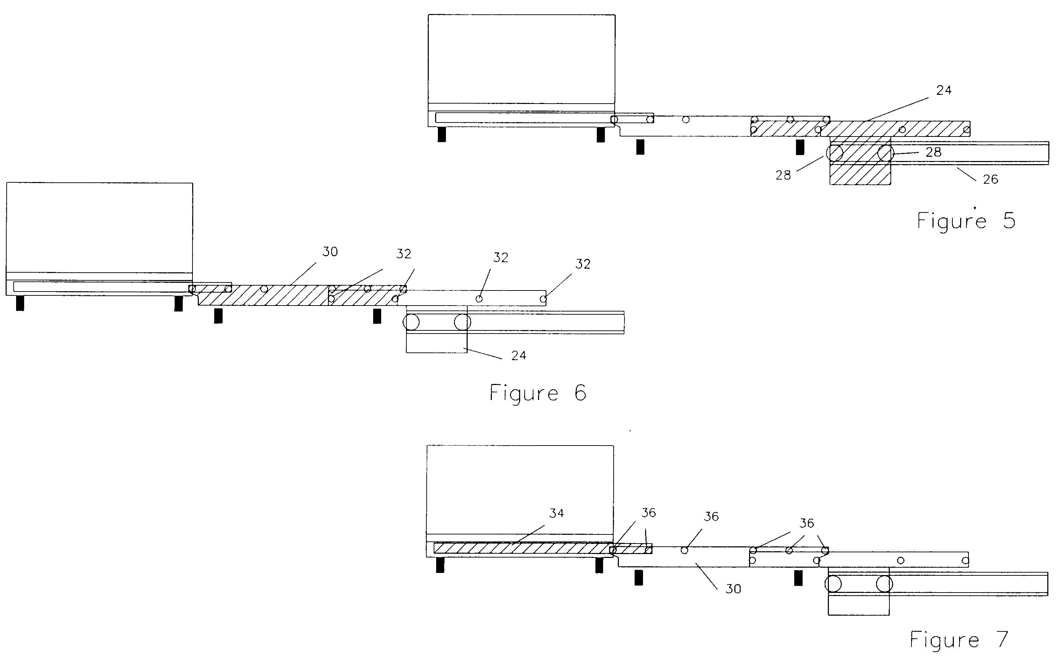

The platten assembly comprises three movable sections, as can most clearly be seen from Figures 5 to 7. A carriage section 24 (Figure 5) is mounted on a base mounting 26, the base mounting being mounted fast on the load platform of the truck 10. Roller bearings 28 are shown in Figure 5, for facilitating the movement of the carriage section 24 on the base mounting 26.

An intermediate section 30 (Figure 6) is mounted on rollers 32 on the carriage section 24. A distal section 34 (Figure 7) is mounted on rollers 36 on the intermediate section 30.

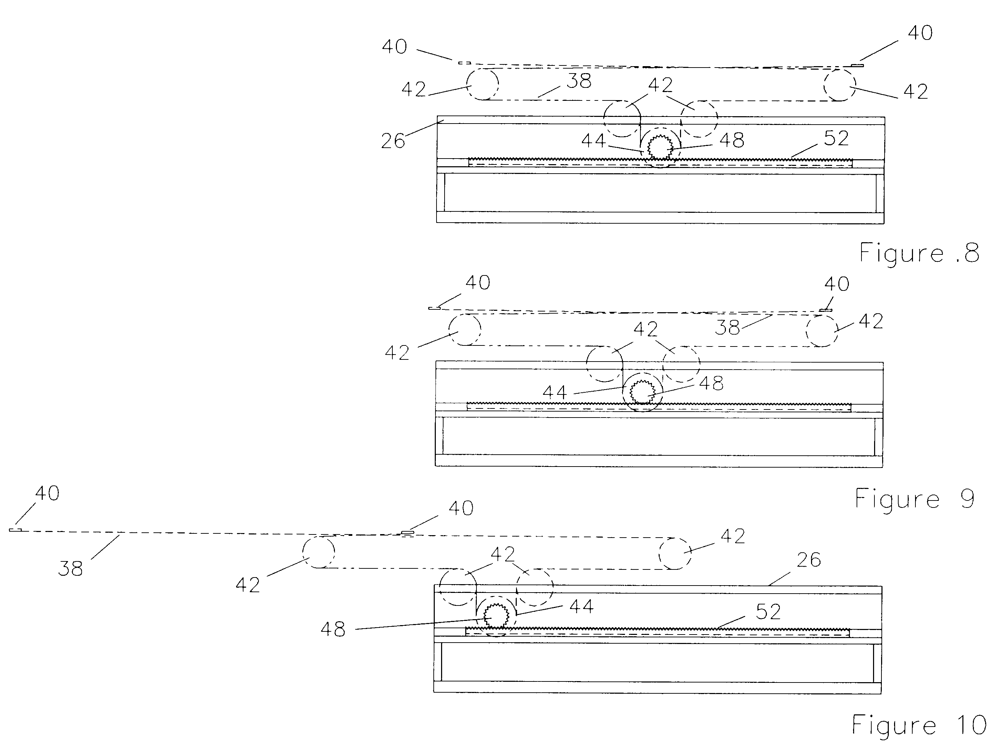

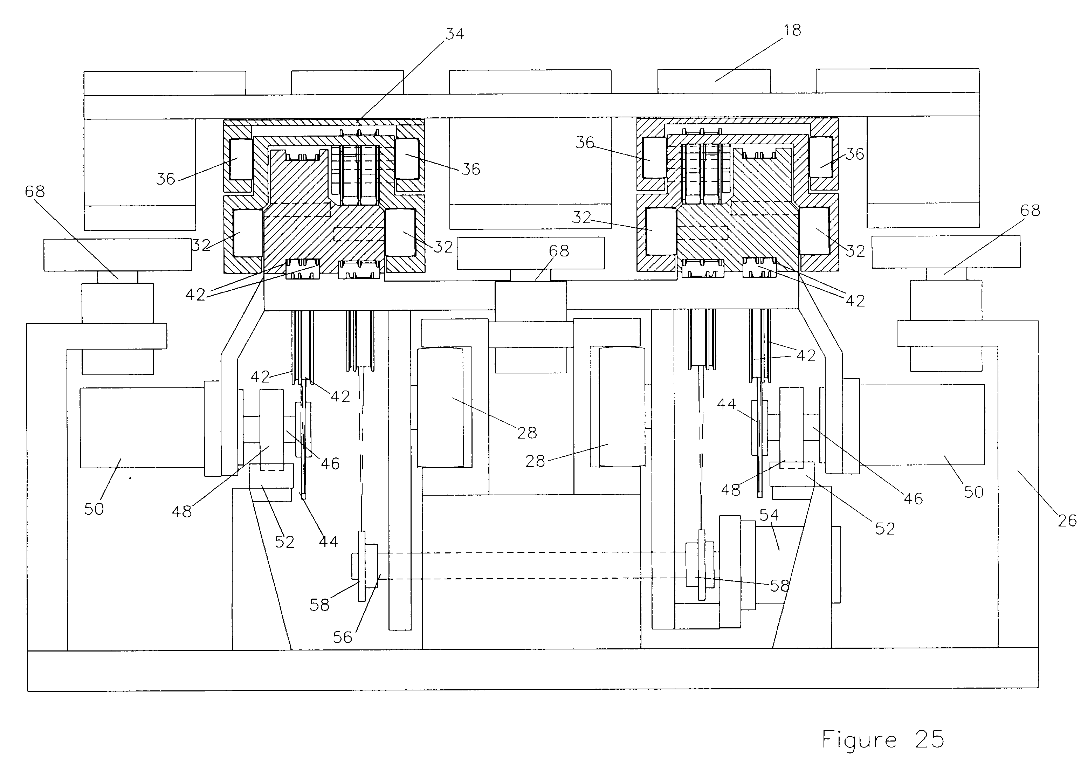

The means for controlling movement of the intermediate sections relative to the base mounting are illustrated in Figures 8 to 10. A chain 38 is anchored at its ends 40 to the intermediate section (not shown in Figures 8 to 10) and passes around four rollers 42 and around a pinion 44, all mounted on the carriage section (not shown in Figures 8 to 10). The rollers 42 are idler rollers, but the pinion 44 is fast to a driven shaft 46 (Figure 25) which also mounts a spur gear 48. The shaft 46 is driven by a hydraulic motor 50 (Figure 25). The spur gear 48 meshes with a rack 52, so that rotation of the shaft 46 causes longitudinal movement of the carriage section 24 (Figure 5) along the rack 52 and simultaneous linear movement of the chain 38 around the idler pulleys 42 so that the intermediate section (mounted between the ends 40 of the chain 38), is longitudinally movable from the central position of Figure 8 to either the short reach position of Figure 9 or the long reach position of Figure 10.

To equalize the forces involved in extending and retracting the intermediate sections 30, and the stresses on the bearings 28, identical motors 50, spur gears 48, gear racks 52, and pinions 44 are provided for each of the two intermediate sections 30; and the two motors 50 are driven in unison by being connected in series.

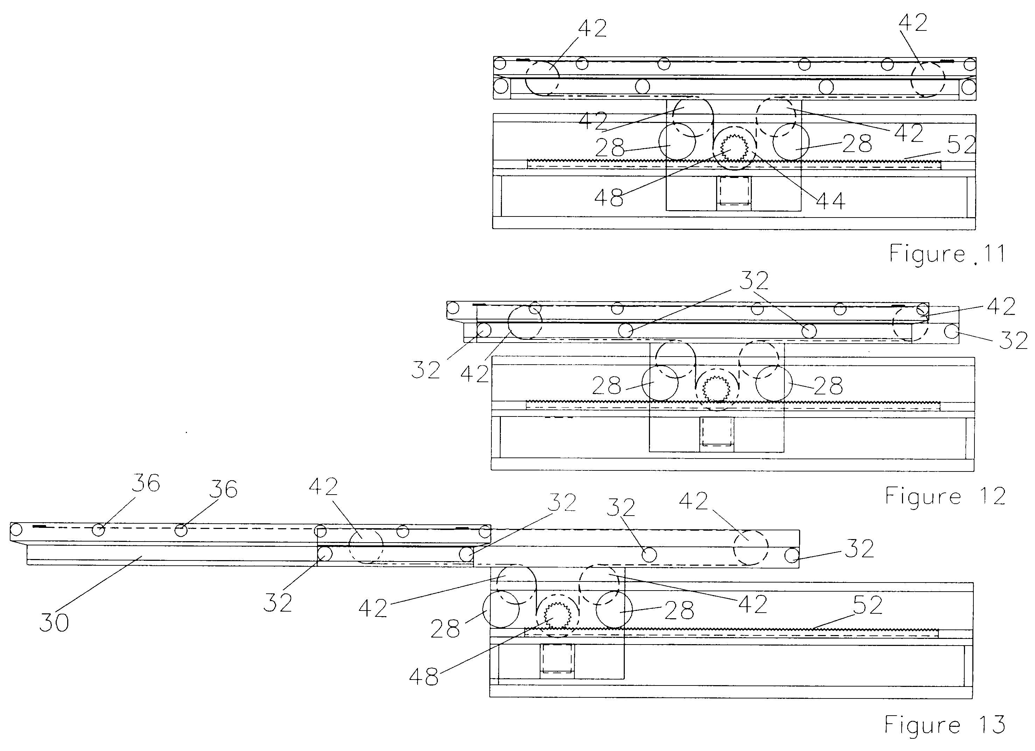

It will clearly be seen from Figures 8 to 10 that movement of the pinion 48 along the rack 52 is accompanied by extension of the intermediate sections 30 (see Figures 11 to 13) in cantilever. Figures 8 to 10 and 11 to 13 show the platten arms extending to the left, but equally they could be extended to the right, crossing over a central vertical plane of symmetry.

Figures 8 to 10 show the chain 38 as being half in chain-dotted line and half in broken line. The significance of that is that the chain must be twisted out of a single plane. If the chain-dotted line half of the chain run, mainly to the left of the centreline of Figure 8, is considered as lying just above the plane of the paper, then the right-hand half of the chain run, shown in broken line, is to be considered as lying immediately below the plane of the paper. In that way, the chain can cross itself between the uppermost pair of idler rollers 42 and the anchorage points 40 at opposite ends of the intermediate sections 30, without fouling itself.

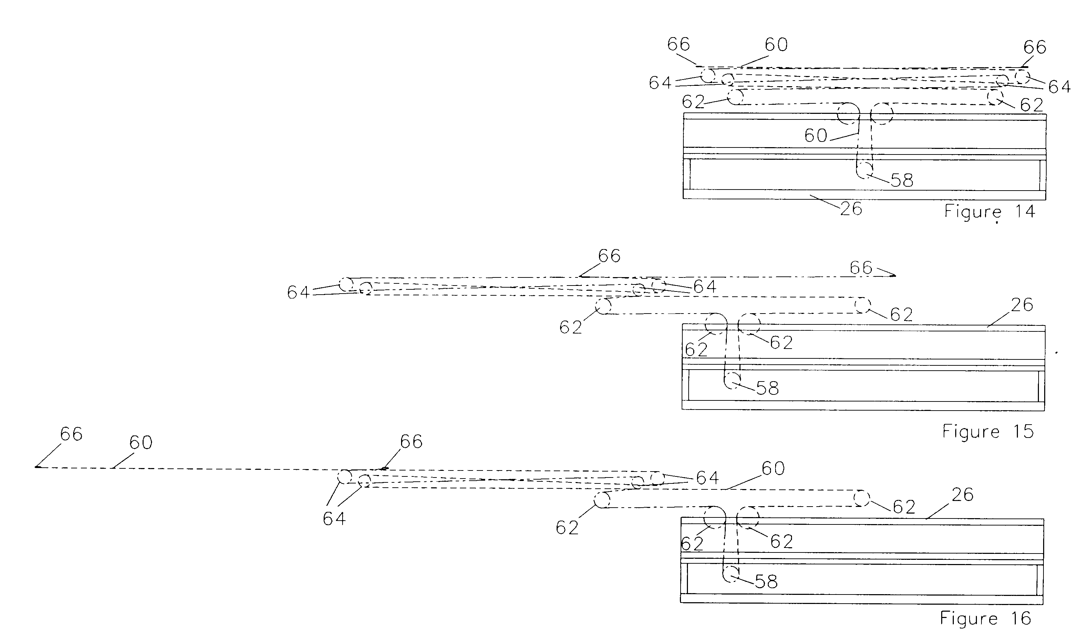

Figures 14 to 16 and 17 to 19 illustrate, in similar manner, the means for selectively controlling the position of the distal sections 34 from the carriage section 24 to move them to project from the intermediate sections 30. Mounted on the carriage section 24 is a hydraulic motor 54 (see Figure 25) driving a shaft 56 (see Figure 25) on which are mounted two pinions 58. Each pinion 58 drives a chain 60 which passes around two pairs of idler rollers 62 on the carriage section 24, and then adopts a convoluted path around two pairs of idler rollers 64 on opposite ends of the intermediate section 30. The ends of each chain at 66 are anchored at opposite ends of the corresponding distal section 34.

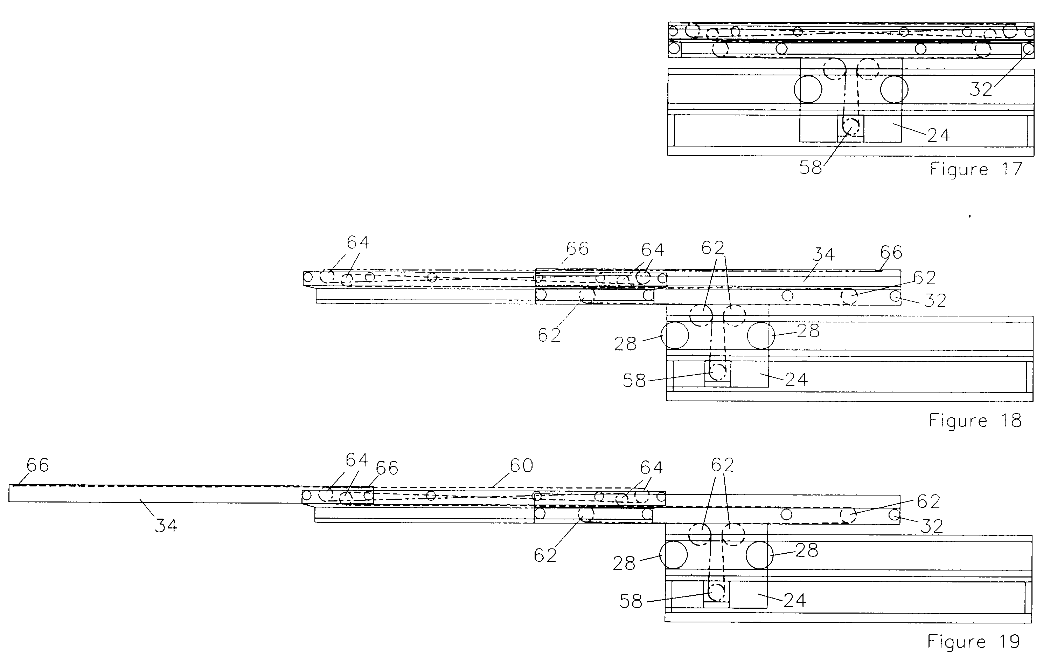

It will be seen from a comparison of Figures 14 and 15 with Figures 17 and 18 that movement of the intermediate section 30, resulting from movement of the carriage section 24, does not affect the position of the distal sections 34 relative to the carriage sections 24. Only the motor 54, actuating the pinions 58, moves the pair of chains 60 which operate the distal sections relative to the carriage sections 24.

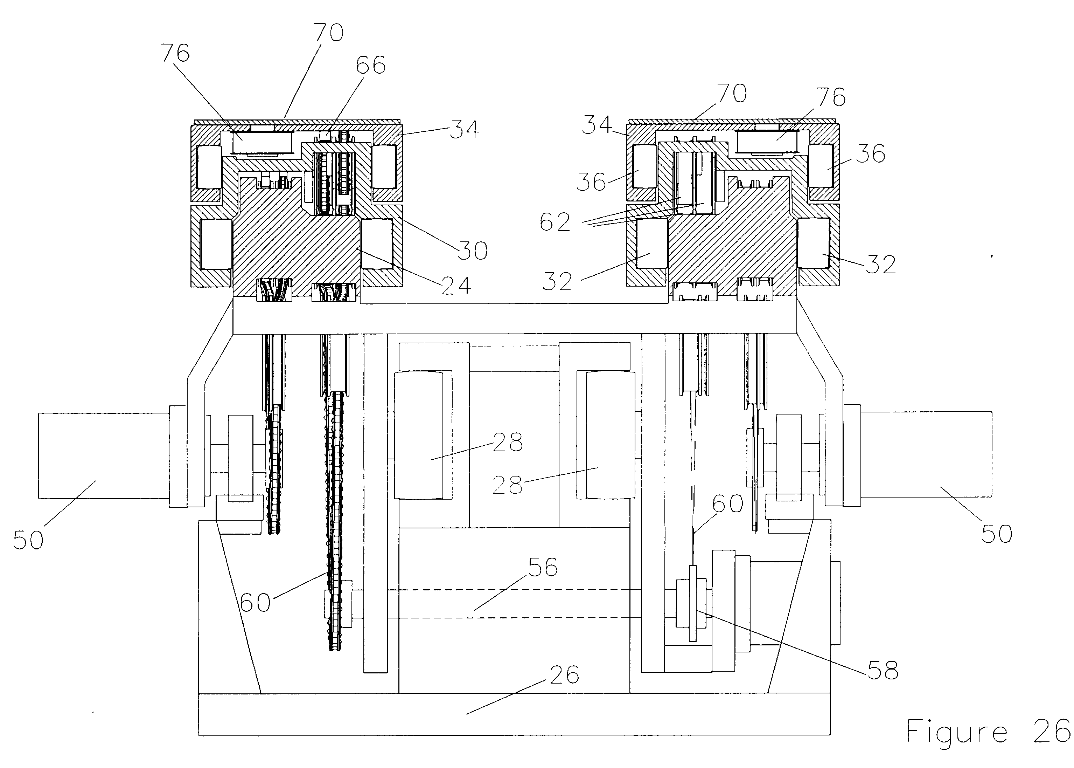

As with the chain 38, the chain 60 is shown part in chain-dotted line and part in broken line to indicate that a first half of the chain run is lying immediately above the plane of the paper and a second half of the same chain run is lying immediately below the plane of the paper. That is most clearly illustrated in the left-hand half of Figure 26, where the chains 38 and 60 are shown in full. In the right-hand half of Figure 26, the chains 38 and 60 are shown schematically by means of a broken centreline only, which is the convention used to illustrate the paths of the chains in all other Figures.

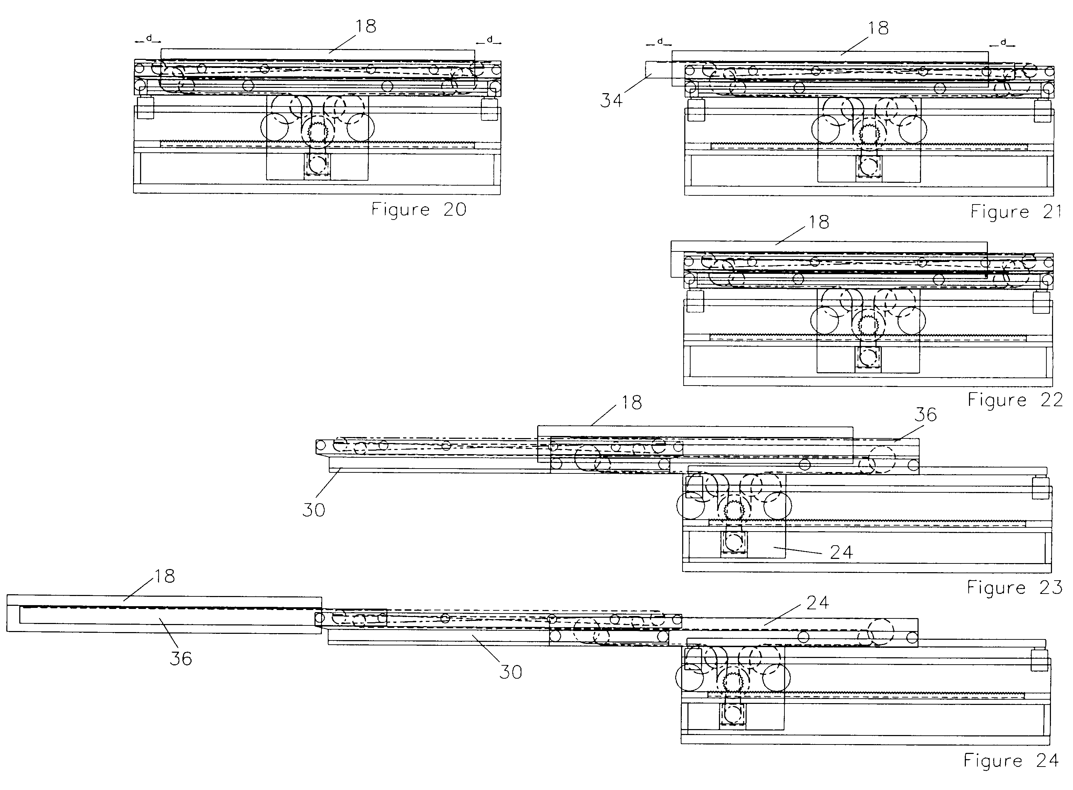

Figures 20 to 24 illustrate the full range of movement of the platten assembly of Figures 2 to 19, in association with a first embodiment of a means for centralizing the pallet on the platten assembly over the load platform of the truck. The sequence of Figures 20 to 24 shows a pallet being moved outwardly from the load platform of the truck, but the Figures could be viewed in reverse sequence as illustrating the retrieval of a pallet from its rear or remote stowed position.

Figure 20 illustrates the pallet 18 in position centrally on the platten assembly over the load platform. The pallet 18 is not as deep as the distal sections 34 of the platten assembly, and the distal sections can be seen extending a distance d from each side of the pallet 18. Figure 21 shows the first movement of the pallet 18, which is achieved by moving the distal sections 34 and the pallet supported thereon to the left for a short distance until the pallet overhangs the left-hand edge of the load platform. This movement is achieved by means of motor 54 (Figure 25) which drives the chains 60 to move the distal sections independently of the intermediate sections 30.

After the movement illustrated in Figure 21 has been completed, hydraulic rams 68 mounted in an array on the base mounting 26 are extended so as to raise the pallet 18 clear of the distal sections 34. With the pallet 18 thus supported, the distal portions 13 are returned, in Figure 22, to their original positions by further operation of the hydraulic motor 54, and then the rams 68 are deactivated to lower the pallet back onto the platten assembly.

The hydraulic motors 50 are then activated as required to move the carriage sections 24 and intermediate sections 30 of the platten arms to the left, to the position shown in Figure 23. Simultaneously the hydraulic motor 54 can be activated to commence movement of the distal sections 34 to the left.

When the intermediate sections 30 have extended nearly to the rear rack beams, the distal sections 34 can be moved to their full lateral extension as shown in Figure 24, to deposit the pallet on the rear beams.

Although not illustrated in the sequence of Figures 20 to 24, a similar sequence of operations would be effected to move the pallet 18 to a front rack position, except that the lateral movement of the carriage and intermediate sections, illustrated between Figures 22 and 23, would be a much shorter movement if any so that the intermediate sections 30 extended only as far as the front racking beams. Thus when the pallet is moved out in cantilever beyond those projecting intermediate sections, only the distal sections 34 penetrate the fork cavity of the pallet immediately prior to placing the pallet on the front beams. Indeed depending on the aisle width no movement at all of the carriage and intermediate sections may be required to pick up a front pallet.

An alternative sequence of movement, not illustrated, would be for the hydraulic rams 68 to be slightly differently positioned, and to lift the pallet 18 when the pallet is in the central position shown in Figure 20. The distal sections 34 could then be moved to the right from the position shown in Figure 20 without moving the pallet to the right, until the pallet only marginally overhangs the left-hand ends of those displaced distal sections 34. The pallet 18 can then be lowered back onto the distal sections 34 of the platten assembly by the hydraulic rams 68, and thereafter moved in a single movement from the pallet position of Figure 20 to that of Figure 23 and ultimately of that to Figure 24. An advantage of this alternative sequence of movement is that a heavily weighted pallet need only be accelerated and decelerated once, which represents an energy saving over the precise sequence illustrated in Figures 20 to 24. On the other hand such a modified sequence is not always possible because it requires protrusion of the distal sections 34 to the right of the load platform in order to deposit a load to the left, and vice versa. There may not necessarily be space on both sides of the aisle for this movement, in which case the movement of Figures 20 to 24 would be preferred.

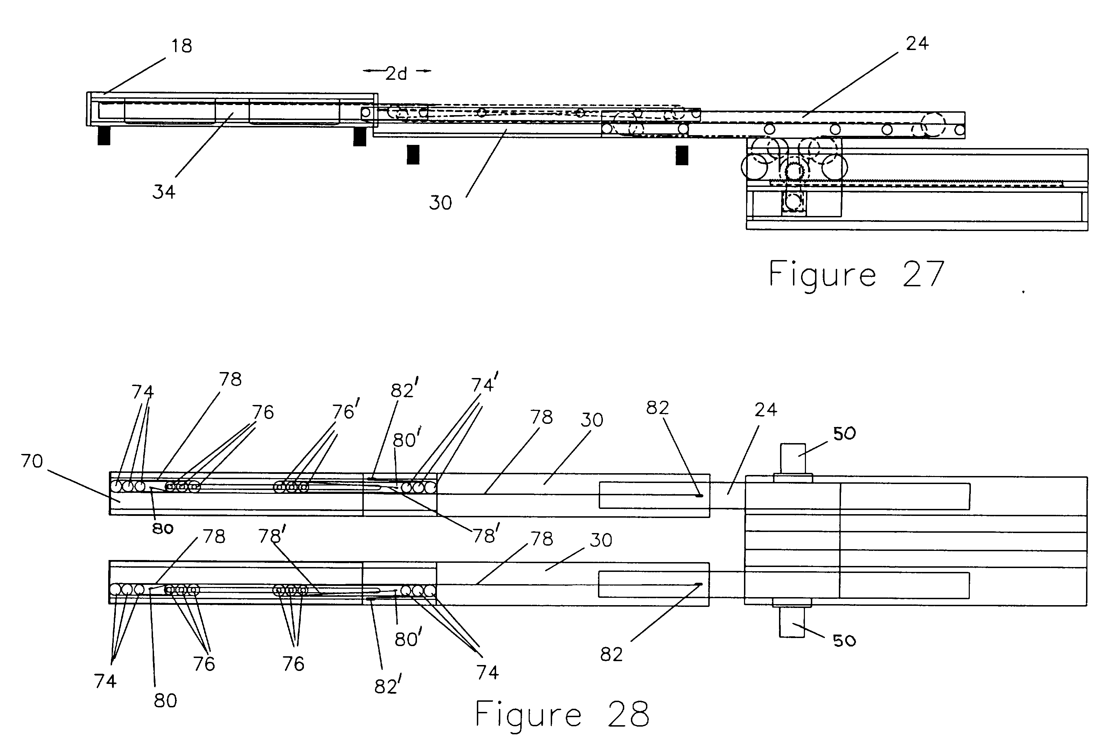

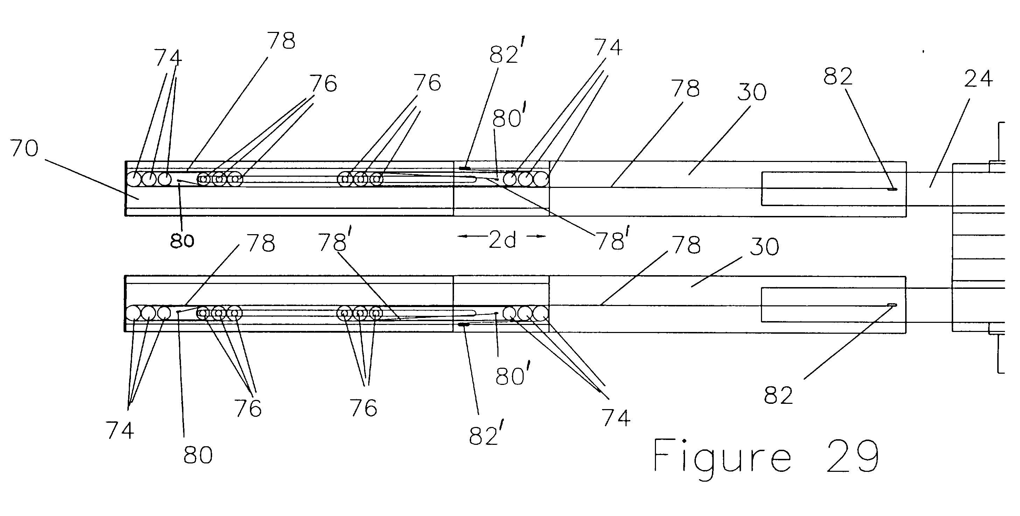

An alternative mechanism for centralizing the pallet on the load platform is shown in Figure 26, and involves a movable top plate portion 70 of each distal section 34. Essentially, if the distal portion is a length 2d longer than the depth of the pallet as illustrated in Figure 20, then each top plate 70, with a length equal to the depth of the pallet, must be capable of sliding over that 2d distance. Figures 26 to 29 show one means for effecting that sliding movement. A pulley system comprises two sets of three rollers 74 and 74', one set at each end of each distal section 34. Intermediate the sets of rollers 74 and 74' are two similar sets, each of three rollers 76 and 76', mounted depending from the top plate 70 as illustrated in Figure 26. Around the rollers 74 and 76 and the left-hand end is wound a continuous belt 78, the ends 80 and 82 of which are anchored on the distal section 34 and the intermediate platten section 30 respectively. To slide the top plate 70 in the opposite direction a second belt 78' is wound in similar fashion around the pulley sets 74' and 76' at the right-hand end of the distal section 34. The belt 78' is anchored at its ends at 80' and 82' to the distal section 34 and the intermediate section 30 respectively. The gearing is such that if each top plate 70 is positioned centrally on its distal section 34 when the distal section is positioned centrally over the corresponding intermediate section 30, then that top plate 70 moves a distance d to the end position shown in Figures 27 to 29 when the distal section 34 extends fully in cantilever from its intermediate section 30.

A further alternative embodiment of a means for centralizing the pallet on the distal sections 34 would involve similar top plates 70, but movable by means of rack and pinion gearing over the distal sections.

The platten assembly described above and illustrated in the drawings may be used associated with control circuitry which can, if required, dispense with operator control in moving the platten assembly to either a front or rear pallet position.

Although not illustrated, an alternative embodiment could dispense with the separate motors 50 and 54 for the independent movement of the intermediate sections 30 and the distal sections 34. Instead, a single motor could be used, associated with a variable ratio gearbox. Selection of a first gear ratio would extend the intermediate and distal sections to the positions shown in Figure 2 for collection or retrieval of a front pallet; and selection of a second gear ratio would extend the intermediate and distal sections to the positions shown in Figure 3 for collection and retrieval of a rear pallet.

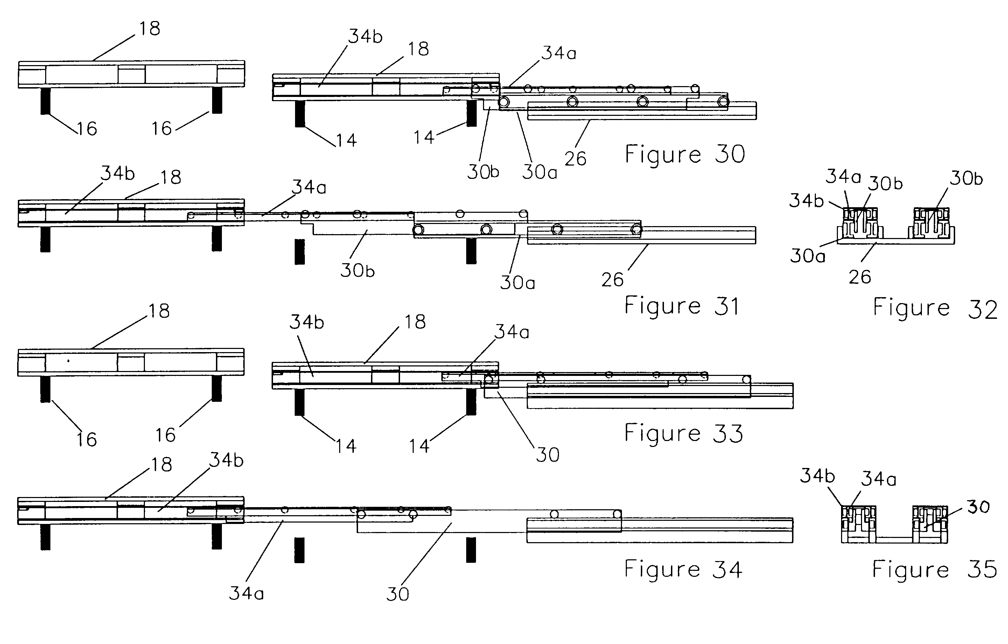

Figures 30 to 32 illustrate an alternative embodiment of the invention shown in use with a racking system wherein the racking beams are spaced inwardly from the front and back of a standard length 1200mm "Europallet". Figure 30 illustrates a platten assembly with four extensible sections, namely two intermediate sections 30a and 30b and two distal sections 34a and 34b. In Figure 30 the final distal section 34b is fully extended relative to the distal section 34a upon which it is mounted. The intermediate sections 30a and 30b are partially extended. This shows the upper intermediate section 30b passing under the pallet overhang and entering a small distance through the pallet cavity and over the front beam. Figure 31 shows all sections fully extended to enter the rear pallet. Figure 32 shows an end section.

The important aspect of the invention is the provision of means to extend the final distal section 34b or both distal sections 34b and 34a which can be slender, under the pallet cavity and over the supporting beam, without having to extend the other intermediate sections, which must be thick, in a proportionate amount as is the requirement in conventional double reach platten units. This can be accomplished by either driving out the final distal section 34b by a separate drive from that which extends the other sections or by driving out the final section 34a with a ratio coupling to the section 34b with this separate drive. The remaining intermediate sections or intermediate sections plus section 34a are driven out the required distance for handling a front or a back pallet by the other drive or by selecting different ratio changes if only one prime driver is used.

Figures 33 to 35 illustrate a similar arrangement but one less intermediate section is used by lengthening all sections except the final distal section 34b which remains approximately the same length as the pallet. The single intermediate section in Figures 33 to 35 is numbered 30.

The independent means for controlling the lateral extension of the distal section 34b or sections 34b and 34a may be by selective gearing or by independent motors or drives and is not illustrated in connection with Figures 30 to 35. However, it should be noted that particularly in Figures 30 to 32 there is a space between the two plates of the intermediate section 30b to house a hydraulic motor for advancing the distal section or sections relative to the intermediate section.

## Claims

1. A platten assembly (10) for a side reach truck (12) of a warehouse racking system, comprising:
a base mounting (26) mountable on the load platform of the truck;
a pair of double reach platten arms extensible in synchronism to one side of a base mounting (26) to front and back pallet positions respectively on one side of the load platform of the truck and to the other side of the base mounting (26) to front and back pallet positions respectively on the other side of the load platform of the truck;
wherein each platten arm comprises:
a carriage section (24) mounted on the base mounting (26) and movable across the base mounting (26) from one side to the other side thereof;
one or more intermediate sections (30) extensible telescopically in cantilever from either side of the carriage section (24); and
a distal section (34) extensible telescopically in cantilever from the intermediate section (30) or from one of the intermediate sections (30) for penetrating the fork cavity of a pallet positioned at a front or back pallet position at either side of the load platform of the truck;
characterized in that a platten arm control mechanism is provided for moving the intermediate sections (30) up to the front or back pallet positions on either side of the load platform of the truck without substantial penetration of the fork cavity of a pallet positioned at that pallet position while causing the distal sections (34) to penetrate the fork cavity.

2. A platten assembly according to claim 1, wherein the platten arm control mechanism comprises
a first drive train for moving the intermediate sections (30) up to the front or back pallet positions on either side of the load platform of the truck without substantial penetration of the fork cavity of a pallet positioned at that pallet position, and
a second drive train for moving the distal sections (34) to penetrate the fork cavity.

3. A platten assembly according to claim 1 or claim 2, wherein each platten arm comprises only one intermediate section (30).

4. A platten assembly according to any precding claim, wherein the carriage sections (24) are conjoined, are laterally movable on the base mounting (26), and are linked to the associated intermediate sections (30) so that lateral extension of the intermediate sections (30) in cantilever from either side of the base mounting (26) is accompanied by lateral movement of the carriage sections (24) towards that respective side.

5. A platten assembly according to any preceding claim, wherein the platten arm control mechanism comprises motor means for controlling the lateral extension of the intermediate sections and selectable gearing means for controlling the lateral extension of the distal sections relative to the mounting sections in response to such lateral movement, the gearing means having a first gear ratio effective to achieve maximum extension of the distal sections when the intermediate sections have extended up to the first pallet position and the gearing means having a second gear ratio effective to achieve maximum extension of the distal sections when the intermediate sections have extended up to the second pallet position.

6. A platten assembly according to any of claims 1 to 4, wherein the platten arm control mechanism comprises a first advancing mechanism (50,48,52,38) for moving the intermediate sections (30) laterally of the carriage sections (24) without causing lateral movement of the distal sections (34) relative to the carriage sections (24) and a second advancing mechanism (54,58,60) for moving the distal sections (34) relative to the carriage sections (24).

7. A platten assembly according to claim 6, wherein the first advancing mechanism comprises one or more first driven gears (48) associated with the carriage sections (24), one or more second driven gears (44) associated with the intermedaite sections and drive means (50) for driving the first and second driven gears in unison so as to establish a fixed gear ratio between the carriage sections (24) and intermediate sections (30) in the lateral direction of movement.

8. A platten assembly according to claim 7, wherein the gear ratio 1:1.7.

9. A platten assembly according to claim 7 or claim 8, wherein the or each first driven gear (48) comprises a spur gear (48) on one of the carriage sections (24) meshing with a gear rack (52) on the base mounting (26).

10. A platten assembly according to any of claims 7 to 9, wherein the or each second driven gear (44) comprises a pinion (44) mounted for rotation with an associated first driven gear (48), and engaging a drive chain (38) anchored at its ends (40) to an associated one of the intermediate sections (30).

11. A platten assembly according to claim 10, wherein there are two first driven gears (48) each associated with a respective one of two second driven gears (44); and the drive means (50) for driving the first and second driven gears in unison comprises a first hydraulic motor (50) for driving an associated pair of one of the first and one of the second driven gears, a second hydraulic motor (50) for driving an associated pair of the other of the first and the other of the second driven gears, and a hydraulic circuit connecting the first and second hydraulic motors (50) in series.

12. A platten assembly according to any of claims 6 to 11, wherein the second advancing mechanism (54,58,60) comprises a pair of driven pinions (58) each of which drivingly engages a chain (60) which traverses a tortuous path over rollers (62,64) at opposite ends (66) of the associated intermediate section or sections (30) and which has its ends anchored to the distal section (34) of the associated platten arm such that movement of the intermediate sections (30) does not cause movement of the distal sections (34) relative to the base mounting (26).

13. A platten assembly according to claim 12, wherein the driven pinions (58) of the second advancing mechanism are driven by a single hydraulic motor (54).

14. A platten assembly according to any preceding claim, further comprising means (68) for temporarily supporting the pallet over the carriage section (24) by raising it from the distal sections of the platten arms while repositioning the distal sections (34) relative to the pallet for movement of the pallet to and from a position centrally of the carriage section (24) and base mounting (26).

15. A platten assembly according to claim 14, wherein the means (68) for temporarily supporting the pallet over the carriage section (24) comprises an array of lifting rams (68) mounted on the carriage section (24), for lifting the pallet clear of the distal sections (34) during repositioning of the distal sections.

16. A platten assembly according to any of claims 1 to 13, wherein each distal section (34) comprises a top plate (70) having a length equal to the depth of the pallets to be lifted, and means (74,76,78) for moving the top plate (70) longitudinally of the distal section (34) in response to relative movement between the distal and associated intermediate sections (30), so that when the distal section (34) is positioned centrally on its intermediate section (30), its top plate (70) is positioned centrally on the distal section (34); and when the distal section (34) is in maximum cantilever from either side of its intermediate section (30), its top plate (70) is positioned at that side of the distal section (34), optionally overhanging in cantilever.

17. A platten assembly according to claim 16, wherein the means (74,76,78) for moving each top plate (70) longitudinally of its distal section (34) comprises a belt (78) and pulley (74,74') mechanism.

18. A platten assembly according to claim 16, wherein the means for moving each top plate longitudinally of its distal section comprises a rack and pinion mechanism.

## Patentansprüche

1. Gabelanordnung (10) (Plattenanordnung) für ein Seitenförderzeug (12) eines Hochregallagers, mit:
einem Grundrahmen (26), der auf der Lastfläche des Förderzeugs montierbar ist;
einem Paar von Gabelarmen doppelter Reichweite, die gleichzeitig miteinander auf eine Seite des Grundrahmens (26) in eine vordere oder eine hintere Palettenposition auf einer Seite der Lastfläche und in Richtung auf die andere Seite des Grundrahmens (26) in eine vordere und hintere Palettenposition auf der anderen Seite der Lastfläche des Förderzeugs verfahrbar sind; wobei jeder Gabelarm folgendes aufweist:
einen Wagenbereich (24), der auf dem Grundrahmen (26) angeordnet ist und quer zu dem Grundrahmen (26) von einer auf die andere Seite bewegbar ist;
ein oder mehrere Zwischenbereiche (30), die teleskopartig frei auskragend auf jeder Seite des Wagenbereichs (24) angeordnet sein können; und
ein entfernter Abschnitt (34), der teleskopartig freikragend von dem Zwischenabschnitt (30) oder von einem der Zwischenabschnitte (30) ausfahrbar ist, um den Gabelhohlraum einer in einer vorderen oder hinteren Palettenposition geparkten Palette auf jeder Seite der Lastfläche des Förderzeuges auszufüllen;
**dadurch gekennzeichnet**, daß ein Steuermechanismus für den Gabelarm vorgesehen ist, um die Zwischenabschnitte (30) in die vordere oder hintere Palettenpositionen auf jeder Seite der Lastfläche des Förderzeuges zu bringen, ohne den Gabelhohlraum einer auf dieser Palettenposition geparkten Palette im wesentlichen auszufüllen, während die distalen Abschnitte (34) in den Gabelhohlraum eingeführt werden.

2. Gabelanordnung nach Anspruch 1, wobei der Steuermechanismus für den Gabelarm zum Bewegen der Zwischenabschnitte (30) zu den vorderen oder hinteren Palettenposition auf jeder Seite der Lastfläche des Hebezeugs einen ersten Antriebszug aufweist, ohne im wesentlichen in den Gabelhohlraum einer aus dieser Palettenposition gepackten Palette einzudringen, und
einen zweiten Antriebszug zum Bewegen der distalen Abschnitte (34), um in den Gabelhohlraum einzudringen.

3. Gabelanordnung nach Anspruch 1 oder 2, wobei jeder Gabelarm nur einen Zwischenabschnitt (30) aufweist.

4. Gabelanordnung nach einem der vorhergehenden Ansprüche, wobei die Wagenabschnitte (24) miteinander verbunden sind, seitlich auf den Grundrahmen (26) beweglich und mit den benachbarten Zwischenabschnitten (30) verbunden sind, so daß eine laterale Auskragung der Zwischenabschnitte (30) auf einer beliebigen Seite des Grundrahmens (26) mit einer seitlichen Bewegung der Wagenabschnitte (24) zu der entsprechenden Seite einhergeht.

5. Gabelanordnung nach einem der vorhergehenden Ansprüche, wobei der Steuermechanismus für den Plattenarm Motormittel aufweist, zum Steuern der seitlichen Auskragung der Zwischenabschnitte und wählbare Gangmittel zum Steuern der seitlichen Auskragung der Endabschnitte in bezug auf die Lagerabschnitte als Folge solcher seitlicher Bewegung, wobei die Gangmittel eine erste Übersetzung haben, um eine maximale Auskragung der distalen Abschnitte zu erreichen, wenn die Zwischenabschnitte bis zur ersten Palettenposition ausgefahren sind, und die Gangmittel eine zweite Übersetzung aufweisen, um maximale Auskragung der distalen Abschnitte zu erreichen, wenn die Zwischenabschnitte zu der zweiten Palettenposition ausgefahren sind.

6. Gabelanordnung nach einem der Ansprüche 1 bis 4, wobei der Steuermechanismus für den Gabelarm einen ersten Vorschubmechanismus (50, 48, 52, 38) umfaßt, um die Zwischenabschnitte (30) seitlich auf den Wagenabschnitt (24) zu verfahren, ohne eine seitliche Bewegung der distalen Abschnitte (34) relativ zu den Wagenabschnitten (24) zu verursachen, und einen zweiten Vorschubmechanismus (54, 58, 60), um die distalen Abschnitte (34) relativ zu den Wagenabschnitten (24) zu bewegen.

7. Gabelanordnung nach Anspruch 6, wobei der erste Vorschubmechanismus ein oder mehrere erste angetriebene Getriebe (48) umfaßt, die mit dem Wagenabschnitt (24) verbunden sind, einen oder mehrere zweite angetriebene Getriebe (44), die mit den Zwischenabschnitten verbunden sind, und Antriebsmittel (50) zum Antreiben der ersten und zweiten angetriebenen Getriebe in synchroner Weise, so daß eine feste Übersetzung zwischen den Wagenabschnitten (24) und den Zwischenabschnitten (30) in der seitlichen Richtung der Bewegung geschaffen wird.

8. Gabelanordnung nach Anspruch 7, wobei das Übersetzungsverhältnis 1:1.7 beträgt.

9. Gabelanordnung nach Anspruch 7 oder Anspruch 8, wobei das erste angetriebene Getriebe (48) ein Stirnzahnrad (48) auf einem der Wagenabschnitte (24) umfaßt, das mit einer Zahnstange (52) auf dem Grundrahmen (26) kämmt.

10. Gabelanordnung nach einem der Ansprüche 7 bis 9, wobei jedes zweite angetriebene Zahnrad (44) ein Ritzel (44) aufweist, das zusammen mit einem zugeordneten ersten angetriebenen Zahnrad (48) rotiert, und mit einer Antriebskette (38) kämmt, die an ihren Enden (40) mit einem zugeordnetem Zwischenabschnitt (30) verbunden ist.

11. Gabelanordnung nach Anspruch 10, wobei zwei erste angetriebene Zahnräder (48) vorgesehen sind, die jeweils einem entsprechenden von zwei zweiten angetriebenen Zahnrädern (44) zugeordnet sind, und wobei die Antriebsmittel (50) zum Antreiben der ersten und zweiten angetriebenen Zahnräder in synchroner Weise einen ersten hydraulischen Motor (50) umfassen, um ein entsprechendes Paar bestehend aus einem der ersten und einem der zweiten angetriebenen Zahnräder anzutreiben, und einen zweiten hydraulischen Motor (50) um ein entsprechendes zugeordnetes Paar, bestehend aus dem anderen ersten und dem anderen zweiten angetriebenen Zahnrad anzutreiben, und ein hydraulischer Kreislauf, der den ersten und den zweiten Hydraulikmotor (50) in Reihe verbindet.

12. Gabelanordnung nach einem der Ansprüche 6 bis 11, wobei der zweite Vorschubmechanismus (54, 58, 60) ein Paar von angetriebenen Ritzeln (58) aufweist, die jeweils treibend mit einer Kette (60) kämmen, die einen gewundenen Pfad über Rollen (62, 64) an einander gegenüberliegenden Enden (66) des zugeordneten Zwischenabschnittes oder der Abschnitte (30) überquert, und deren Enden mit dem distalen Abschnitt (34) des jeweiligen Gabelarms verbunden ist, so daß eine Bewegung der Zwischenabschnitte (30) keine Bewegung der distalen Abschnitte (34) in bezug auf den Grundrahmen (26) auslöst.

13. Gabelanordnung nach Anspruch 12, wobei die angetriebenen Ritzel (58) des zweiten Vorschubmechanismus von einem einzelnen hydraulischen Motor (54) angetrieben werden.

14. Gabelanordnung nach einem der vorhergehenden Ansprüche, weiter mit Mitteln (68) zum zeitweisen Unterstützen der Palette überhalb des Wagenabschnittes (24), in dem sie von den distalen Abschnitten der Plattenarme angehoben wird, während die distalen Abschnitte (34) relativ zu der Palette neu positioniert werden, um die Palette auf eine zentrale Position auf dem Wagenabschnitt (24) und dem Grundrahmen (26) entweder hin- oder wegzuziehen.

15. Gabelanordnung nach Anspruch 14, wobei die Mittel (68) zum zeitweisen Unterstützen der Paletten oberhalb des Wagenabschnittes (24) eine Anordnung von Hebekolben (68) umfassen, die auf dem Wagenabschnitt (24) angeordnet sind, um die Palette während der Neupositionierung der distalen Abschnitte von den distalen Abschnitten (34) abzuheben.

16. Gabelanordnung nach einem der Ansprüche 1 bis 13, wobei jeder distale Abschnitt (34) eine obere Platte (70) aufweist, mit einer Länge, die der Tiefe der zu hebenden Paletten entspricht, und Mitteln (74, 76, 78) zum Bewegen der oberen Platte (70) in Längsrichtung des distalen Abschnitts (34) in Abhängigkeit von einer relativen Bewegung zwischen dem distalen und den zugeordneten Zwischenabschnitten (30), so daß in dem Fall, daß der distale Abschnitt (34) zentral auf seinem Zwischenabschnitt (30) angeordnet ist, seine obere Platte (70) zentral auf dem distalen Abschnitt (34) angeordnet ist; und wenn der distale Abschnitt (34) in der maximal auskragenden Stellung auf jeweils einer Seite seines Zwischenabschnittes (30) ist, seine obere Platte (70) auf der Seite des distalen Abschnitts (34) angeordnet ist, optional in auskragender Weise.

17. Gabelanordnung nach Anspruch 16, wobei die Mittel (74, 76, 78) zum Bewegen jeder oberen Platte (70) in Längsrichtung seines distalen Abschnittes (34) einen Gurt- (78) und Scheiben (74,74') - Mechanismus aufweisen.

18. Gabelanordnung nach Anspruch 16, wobei die Mittel zum Bewegen jeder oberen Platte in Längsrichtung ihres distalen Abschnittes einen Zahnstangen/Ritzel-Mechanismus aufweisen.

## Revendications

1. Un plateau (10) pour un chariot élévateur latéral (12) d'un système de casiers de stockage, comprenant:
un châssis de base (26) qui se monte sur la plate-forme de charge du chariot;
une paire de bras élévateurs doubles de plateau extensible en synchronisation d'un côté d'un châssis de base (26) vers les positions de palette avant et arrière respectivement d'un côté de la plate-forme de charge du chariot et de l'autre côté du châssis de base (26) vers les positions de palette avant et arrière de l'autre côté de la plate-forme de charge du chariot;
dans lequel chaque bras du plateau comprend:
une section à chariot (24) montée sur le châssis de base (26) et mobile d'un côté à l'autre du châssis de base (26);
une ou plusieurs sections intermédiaires (30) extensibles de manière télescopique en porte-à-faux d'un côté ou de l'autre de la section à chariot (24); et
une section distale (34) extensible de manière télescopique en porte-à-faux de la section intermédiaire (30) ou de l'une des sections intermédiaires (30) pour pénétrer la cavité à fourche d'une palette située en position de palette avant ou arrière d'un côté ou de l'autre de la plate-forme de charge du chariot;
caractérisé en ce qu'un mécanisme de commande des bras du plateau est fourni pour déplacer les sections intermédiaires (30) jusqu'aux positions de palette avant ou arrière d'un côté ou de l'autre de la plate-forme de charge du chariot sans pénétration considérable de la cavité à fourche d'une palette située sur cette position de palette tout en faisant pénétrer les sections distales (34) dans la cavité à fourche.

2. Un plateau conformément à la revendication 1, dans lequel le mécanisme de commande des bras du plateau comprend:
un premier train d'engrenage pour déplacer les sections intermédiaires (30) jusqu'aux positions de palette avant ou arrière d'une côté ou de l'autre de la plate-forme de charge du chariot sans pénétration considérable de la cavité à fourche d'une palette située sur cette position de palette, et
un second train d'engrenage pour déplacer les sections distales (34) pour pénétrer la cavité à fourche.

3. Un plateau conformément à la revendication 1 ou la revendication 2, dans lequel chaque bras de plateau ne comprend qu'une section intermédiaire (30).

4. Un plateau conformément à toute revendication précédente, dans lequel les sections à chariot (24) sont reliées, sont latéralement mobiles sur le châssis de base (26), et sont liées sur les sections intermédiaires (30) associées afin que l'extension latérale des sections intermédiaires (30) en porte-à-faux d'un côté ou de l'autre du châssis de base (26) soit accompagnée du mouvement latéral des sections à chariot (24) vers ce côté respectif.

5. Un plateau conformément à toute revendication précédente, dans lequel le mécanisme de commande des bras du plateau comprend un moyen moteur pour contrôler l'extension latérale des sections intermédiaires et un moyen d'engrenage sélectif pour contrôler l'extension latérale des sections distales par rapport aux sections de châssis en réponse à un tel mouvement latéral, le moyen d'engrenage ayant un premier rapport d'engrenage efficace pour réaliser l'extension maximale des sections distales quand les sections intermédiaires se sont étendues jusqu'à la première position de palette et le moyen d'engrenage ayant un deuxième rapport d'engrenage efficace pour réaliser l'extension maximale des sections distales quand les sections intermédiaires se sont étendues jusqu'à la deuxième position de palette.

6. Un plateau conformément aux revendications 1 à 4, dans lequel le mécanisme de commande des bras du plateau comprend un premier mécanisme pousseur (50, 48, 52, 38) pour déplacer les sections intermédiaires (30) latéralement par rapport aux sections à chariot (24) sans causer le mouvement latéral des sections distales (34) par rapport aux sections à chariot (24) et un deuxième mécanisme pousseur (54, 58, 60) pour déplacer les sections distales (34) par rapport aux sections à chariot (24).

7. Un plateau conformément à la revendication 6, dans lequel le premier mécanisme pousseur comprend un ou plusieurs premiers engrenages menés (48) associés aux sections à chariot (24), un ou plusieurs deuxièmes engrenages menés (44) associés aux sections intermédiaires et un moyen d'entraînement (50) pour entraîner les premiers et deuxièmes engrenages menés ensemble afin d'établir un rapport d'engrenage fixe entre les sections à chariot (24) et les sections intermédiaires (30) dans la direction latérale du mouvement.

8. Un plateau conformément à la revendication 7, dans lequel le rapport d'engrenage est 1:1,7.

9. Un plateau conformément à la revendication 7 ou la revendication 8, dans lequel le ou chaque premier engrenage mené (48) comprend un engrenage droit (48) sur l'une des sections à chariot (24) mordant dans une crémaillère d'engrenages (52) sur le châssis de base (26).

10. Un plateau conformément aux revendications 7 à 9, dans lequel le ou chaque deuxième engrenage mené (44) comprend un pignon (44) monté pour rotation avec un premier engrenage mené associé (48), et mettant en prise une chaîne d'entraînement (38) ancrée à son extrémité (40) sur l'une des sections intermédiaires (30) associées.

11. Un plateau conformément à la revendication 10, dans lequel il y a deux premiers engrenages menés (48), chacun associé à l'un des deux deuxièmes engrenages menés (44); et le moyen d'entraînement (50) pour entraîner les premiers et deuxièmes engrenages menés ensemble comprend un premier moteur hydraulique (50) pour entraîner une paire associée de l'un des premiers et de l'un des deuxièmes engrenages menés, un deuxième moteur hydraulique (50) pour entraîner une paire associée de l'autre des premiers et de l'autre des deuxièmes engrenages menés, et un circuit hydraulique raccordant les premier et deuxième moteurs hydrauliques (50) en série.

12. Un plateau conformément aux revendications 6 à 11, dans lequel le deuxième mécanisme pousseur (54, 58, 60) comprend une paire de pignons menés (58) chacun d'entre eux met, par entraînement, une chaîne (60) en prise qui traverse une trajectoire tortueuse sur des rouleaux (62, 64) aux extrémités opposées (66) de la section ou les sections intermédiaires associées (30) et qui a ses extrémités ancrées dans la section distale (34) du bras de plateau associé afin que le mouvement des sections intermédiaires (30) n'entraîne pas le mouvement des sections distales (34) par rapport au châssis de base (26).

13. Un plateau conformément à la revendication 12, dans lequel les pignons menés (58) du deuxième mécanisme pousseur sont entraînés par un seul moteur hydraulique (54).

14. Un plateau conformément à toute revendication précédente, comprenant également un moyen (68) pour supporter temporairement la palette sur la section à chariot (24) en la soulevant des sections distales des bras du plateau tout en repositionnant les sections distales (34) par rapport à la palette pour un mouvement de va-et-vient de la palette par rapport à une position centrale de la section à chariot (24) et du châssis de base (26).

15. Un plateau conformément à la revendication 14, dans lequel le moyen (68) de supporter temporairement le plateau sur la section à chariot (24) comprend un arrangement de pistons de levage (68) montés sur la section à chariot (24), pour soulever la palette à distance des sections distales (34) pendant la remise en place des sections distales.

16. Un plateau conformément aux revendications 1 à 13, dans lequel chaque section distale (34) comprend une plaque supérieure (70) ayant une longueur égale à la profondeur des palettes devant être soulevées, et un moyen (74, 76, 78) pour déplacer la plaque supérieure (70) longitudinalement le long de la section distale (34) en réponse au mouvement relatif entre la section distale et la section intermédiaire associée (30), afin que lorsque la section distale (34) est placée centralement sur sa section intermédiaire (30), sa plaque supérieure (70) est placée centralement sur la section distale (34); et quand la section distale (34) est au maximum en porte-à-faux d'un côté ou de l'autre de sa section intermédiaire (30), sa plaque supérieure (70) est placée de ce côté de la section distale (34), en option en porte-à-faux.

17. Un plateau conformément à la revendication 16, dans lequel le moyen (74, 76, 78) pour déplacer chaque plaque supérieure (70) longitudinalement le long de sa section distale (34) comprend un mécanisme à courroie (78) et à poulies (74, 74').

18. Un plateau conformément à la revendication 16, dans lequel le moyen pour déplacer chaque plaque supérieure longitudinalement le long de sa section distale comprend un mécanisme à crémaillère.
